# EUROPEAN PATENT SPECIFICATION

(11) **EP 2 621 166 B1**
(45) Date of publication and mention of the grant of the patent: **25.01.2017**
(21) Application number: 11826762.4
(22) Date of filing: 13.09.2011
(51) Int. Cl.: H04N 21/236, H04N 21/434, H04N 21/81, H04N 21/242, H04N 21/8547, H04N 21/43, H04H 20/93

(54) **RECEIVER APPARATUS, RECEPTION METHOD, TRANSMITTER APPARATUS, TRANSMISSION METHOD, PROGRAM AND BROADCAST SYSTEM**
EMPFANGSVORRICHTUNG, EMPFANGSVERFAHREN, SENDEVORRICHTUNG, SENDEVERFAHREN, PROGRAMM UND SENDESYSTEM
APPAREIL RÉCEPTEUR, PROCÉDÉ DE RÉCEPTION, APPAREIL ÉMETTEUR, PROCÉDÉ D'ÉMISSION, PROGRAMME ET SYSTÈME DE DIFFUSION

(30) Priority: 13.05.2011 US 201113107604; 21.09.2010 US 384888 P
(43) Date of publication of application: 31.07.2013
(73) Proprietor: Sony Corporation, Tokyo 108-0075 (JP)
(72) Inventor: DEWA Yoshiharu, Tokyo 108-0075 (JP)
(74) Representative: Witte, Weller & Partner Patentanwälte mbB
(86) International application number: PCT/JP2011/070801
(87) International publication number: WO 2012/039316

(56) References cited:
- EP-A2- 2 432 245
- WO-A2-2011/074218
- JP-A- 2000 201 280
- JP-A- 2006 311 120
- JP-A- 2010 166 335
- JP-A- 2010 183 446
- JP-A- 2010 183 446
- JP-A- 2012 248 908
- US-A1- 2007 140 650
- US-A1- 2008 010 342
- US-B1- 6 493 832
- WHITAKER J C: "Advanced Television Systems Committee Standards Work Update", SMPTE - MOTION IMAGING JOURNAL, SOCIETY OF MOTION PICTURE AND TELEVISION ENGINEERS, WHITE PLAINS, NY, US, vol. 118, no. 6, 1 September 2009 (2009-09-01), pages 33-37, XP001559240, ISSN: 0036-1682

## Description

### [Technical Field]

The present invention relates to a reception apparatus, a reception method, a transmission apparatus, a transmission method, a program, and a broadcasting system. Particularly, the present invention relates to a reception apparatus, a reception method, a transmission apparatus, a transmission method, a program, and a broadcasting system suitable for use in the case where content of data broadcasting is executed in an interlocking relationship with the progress of AV content which corresponds to a program, for example, in a digital television broadcast.

### [Background Art]

Conventionally, digitalization of television broadcasting has been promoted in Japan, and digital terrestrial broadcasting, digital BS broadcasting and so forth have become widespread. Further, in digital television broadcasting such as digital terrestrial broadcasting, not only broadcasting of AV content which corresponds to a program but also data broadcasting have been implemented. With content of the data broadcasting, it is possible, for example, to display information relating to a program (AV content) being broadcast, to display information which does not relate to a program being broadcast (such as a notice of another program, a news, a weather forecast, traffic information or the like) or to cause an application which is interlocked with a program (AV content) being broadcast to be executed (refer to, for example, Patent Literature 1).

It is to be noted that data broadcasting in Japan is implemented such that a band for data broadcasting is assured in advance in a broadcasting band of digital television broadcasting upon digitalization of television broadcasting and content for data broadcasting is broadcast using this band.

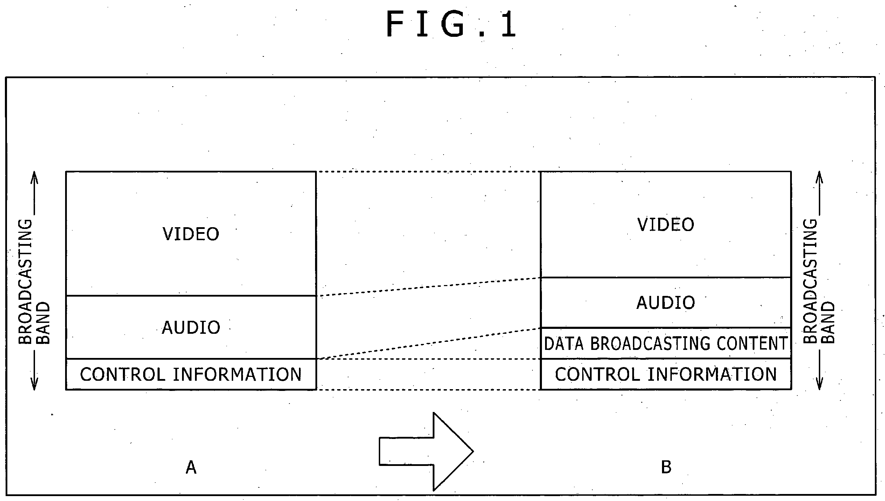

Incidentally, in digital television broadcasting in the United States, broadcasting which corresponds to the data broadcasting in digital television broadcasting in Japan is not implemented as yet. In particular, in the United States at present, a broadcasting band for digital television broadcasting is occupied by a band for Video, a band for audio and a band for control information, and a band for broadcasting content for data broadcasting is not provided as illustrated in A of FIG. 1. Accordingly, in order to assure a band for broadcasting content for data broadcasting in the limited broadcasting band for digital television broadcasting, it is necessary to narrow the band for Video and the band for audio as illustrated in B of FIG. 1.

### [Citation List]

### [Patent Literature]

[PTL 1] JP 2006-50237A

### [Summary]

### [Technical Problem]

However, to narrow the band for video and the band for audio to assure a band for broadcasting content for data broadcasting leads to the deterioration of the picture quality and the sound quality of television broadcasting. Therefore, the narrowing cannot be considered realistic countermeasures.

In US 2007/0140650 A1 a broadcast receiving apparatus which can change the Operation of a Java application depending on whether a broadcast is being Viewed or recorded content is being reproduced. Control information, including first control information which controls startup of the Java application at the time of broadcasting and second control information which controls startup of a Java application that has been recorded into a secondary storage unit, is acquired from a broadcast Signal; an AM controls startup of the Java application in accordance with the first control information at the time of broadcasting, and controls startup of the Java application in accordance with the second control information in the case of executing a Java application stored in the secondary storage unit.

In US 2008/0010342 A1 a synchronous updating of dynamic interactive applications is disclosed. An automation server inter-faces with broadcast scheduling (US) systems of various types to s automatically synchronize the behavior of interactive applications relative to various broadcast programs, such as television shows and commercials, so as to maintain the appropriate interactive. application for whatever broadcast program is airing.

Further, in the United States, since a retransmission system of a digital television program in which a CATV (cable TV) network is used has widespread, such a problem as described below may possibly occur.

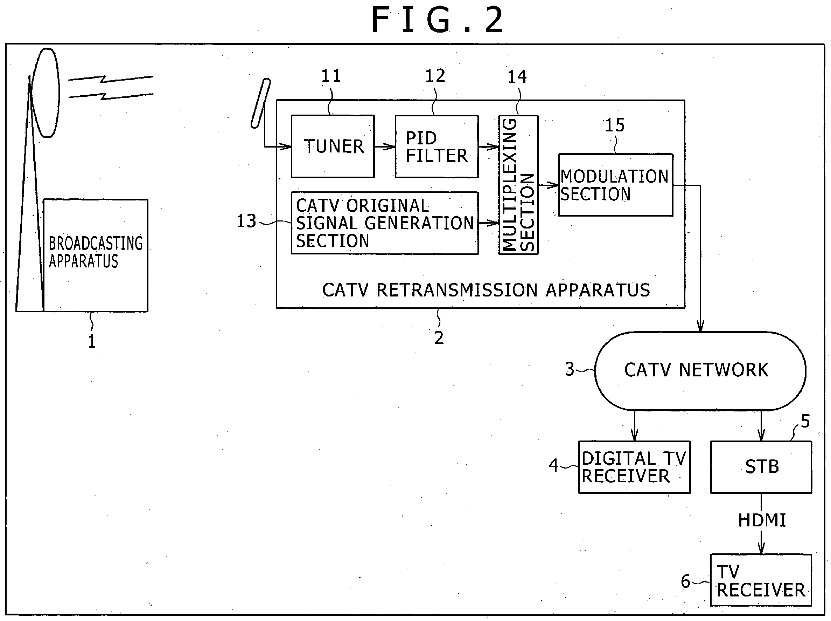

FIG. 2 shows an example of a configuration of a retransmission system of a digital television program using a CATV network.

This retransmission system is configured principally from a broadcasting apparatus 1, a CATV retransmission apparatus 2, a CATV network 3, a digital television receiver 4, a set-top box (STB) 5 and a television receiver 6.

The broadcasting apparatus 1 provided in a broadcasting station or the like broadcasts a digital television broadcasting signal using a ground wave or a satellite wave. The CATV retransmission apparatus 2 provided in a cable TV station or the like receives a broadcasted digital television broadcast, removes unnecessary information and adds information unique to the CATV, and then retransmits a resulting signal to the digital television receiver 4, set-top box 5 and so forth through the CATV network 3.

The CATV retransmission apparatus 2 is configured from a tuner 11, a PID filter 12, a CATV original signal generation section 13, a multiplexing section 14 and a modulation section 15.

The tuner 11 receives and demodulates a digital television broadcasting signal of each channel and outputs a resulting TS (transport stream) to the PID filter 12. The PID filter 12 removes a packet corresponding to a predetermined packet ID (packet which has no relation to AV content as a program) from the TS and outputs a resulting signal to the multiplexing section 14. The CATV original signal generation section 13 produces a packet in which information unique to the CATV station is placed and outputs the packet to the multiplexing section 14. The multiplexing section 14 multiplexes an output of the PID filter 12 and an output of the CATV original signal generation section 13 and outputs a resulting signal to the modulation section 15. The modulation section 15 modulates the output of the multiplexing section 14 in accordance with a modulation method suitable for the CATV network 3 and retransmits the modulated signal to the digital television receiver 4, set-top box 5 and so forth through the CATV network 3.

The digital television receiver 4 which is compatible with the CATV receives the TS of the retransmitted digital television broadcast through the CATV network 3 and decodes the received TS, and then displays a resulting video and outputs a resulting audio.

The set-top box 5 which is compatible with the CATV receives the TS of the retransmitted digital television broadcast through the CATV network 3 and decodes the received TS, and then outputs a resulting video signal and audio signal to the television receiver 6 through a HDMI cable or the like. The television receiver 6 displays a video and outputs an audio based on the video signal and the audio signal inputted thereto from the set-top box 5 through the HDMI cable or the like.

As described above, in the CATV retransmission apparatus 2, a packet corresponding to a predetermined packet ID (a packet which.has no relation to AV content as a program) is removed from a TS of a digital broadcasting signal by the PID filter 12. Accordingly, even if a band for broadcasting content for data broadcasting is assured in a broadcasting band as illustrated in B of FIG. 1, such a situation that a packet in which content for data broadcasting is placed is removed by the PID filter 12 may possibly occur.

The present invention has been made in View of such a Situation as described above and contemplates implementation of a service of content for data broadcasting which can be interlocked with the progress of a television program without providing a band for data broadcasting in a broadcasting band of digital television broadcasting.

### [Solution to Problem]

According to a first aspect of the present invention, there is provided a reception apparatus as claimed in claim 1, a reception method as claimed in 6 and a program for controlling a reception apparatus as claimed in claim 7. According to a second aspect of the present invention, there is provided a broadcasting system as claimed in claim 8.

According to the first aspect of the present invention, trigger information for controlling a process relating to an application program to be executed in an interlocked relationship with the progress of the AV content is received. Then, the state of a first application program retained by the retaining means for retaining the application program is controlled depending upon whether or not first said trigger information, which designates a process relating to the first application program as a controlling target, is received in synchronism with a reception timing determined in advance.

In an embodiment, trigger information for controlling a process relating to an application program to be executed by a reception apparatus in an interlocked relationship with the progress of the AV content is transmitted in synchronism with a transmission timing corresponding to a reception timing determined in advance by the reception apparatus.

According to the second aspect of the present invention, the transmission apparatus transmits trigger information for controlling a process relating to an application program to be executed by the reception apparatus in an interlocked relationship with the progress of the AV content is transmitted in synchronism with a transmission timing corresponding to a reception timing determined in advance by the reception apparatus. The reception apparatus receives the trigger information for controlling a process relating to the application program to be executed in an interlocked relationship with the progress of the AV content. Further, the reception apparatus controls the state of the first application program retained by the retaining means in response to whether or not first trigger information for designating a process relating to the first application program as a controlling target is received in synchronism with a reception timing determined in advance.

### [Advantageous Effects of Invention]

With the first aspect of the present invention, it is possible to start up an application program, ignite an event or end the application program or event in an interlocking relationship with the progress of AV content such as a television program.

With the second aspect of the present invention, it is possible to control of start-up of an application program, ignition of an event or ending of the application program or event in an interlocking relationship with the progress of AV content such as a television program without providing a band for data broadcasting in a broadcasting band of digital television broadcasting.

With the third aspect of the present invention, it is possible to control an application program in an interlocked relationship with the progress of AV content such as a television program without providing a band for data broadcasting in a broadcasting band of digital television broadcasting.

### [Brief Description of Drawings]

[FIG. 1]
   FIG. 1 is a view illustrating a broadcasting band of digital television broadcasting.
[FIG. 2]
   FIG. 2 is a view showing an example of a configuration of an existing CATV retransmission system.
[FIG. 3]

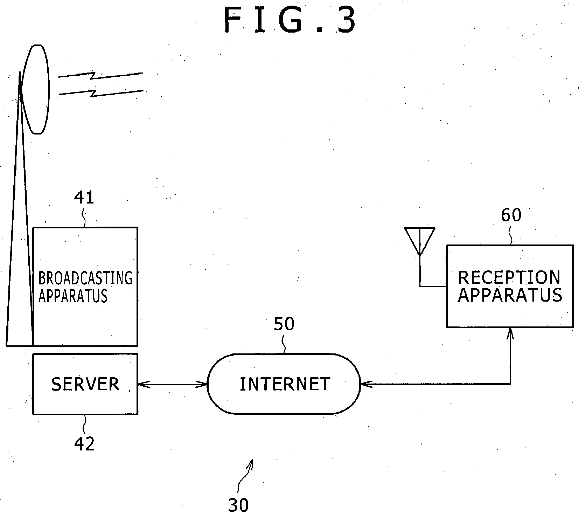

   FIG. 3 is a view showing an example of a configuration of a broadcasting system to which the present invention is applied.
[FIG. 4]

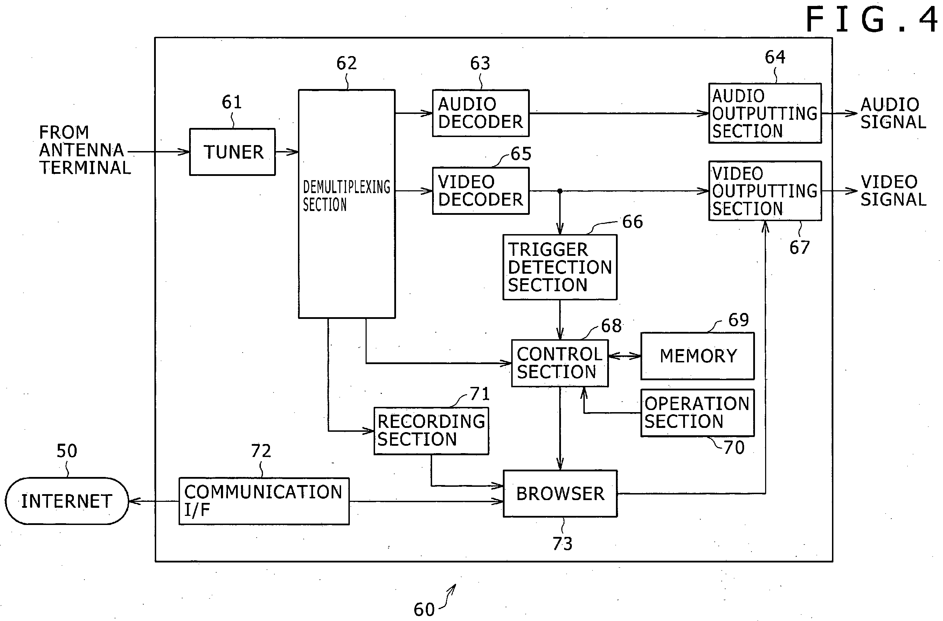

   FIG. 4 is a block diagram showing an example of a configuration of a reception apparatus to which the present invention is applied.
[FIG. 5]

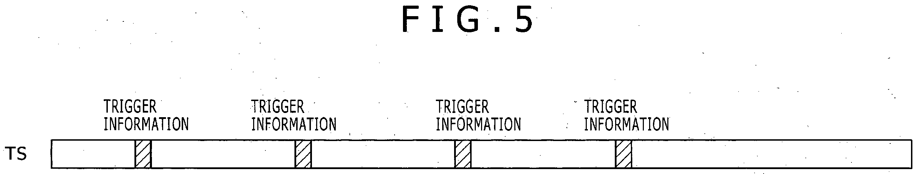

   FIG. 5 is a view illustrating a concept of transmission of trigger information included in a PCR packet of a TS.
[FIG. 6]

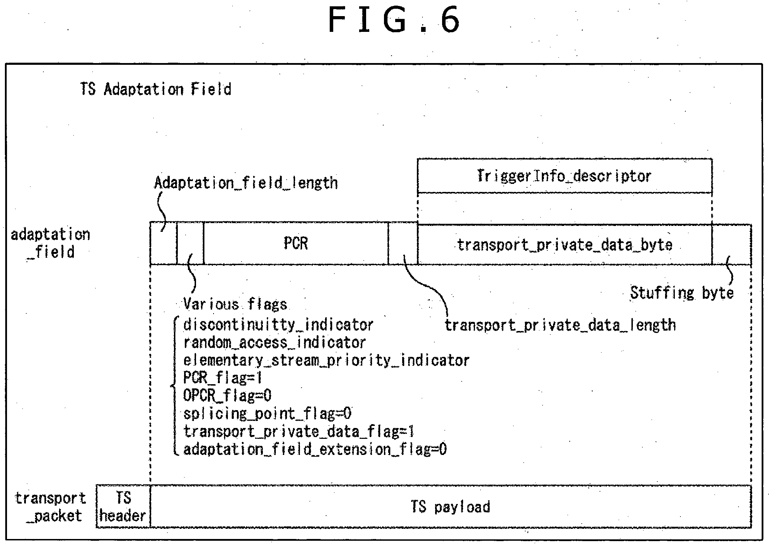

   FIG. 6 is a view illustrating particular arrangement of a trigger information in a PCR packet.
[FIG. 7]

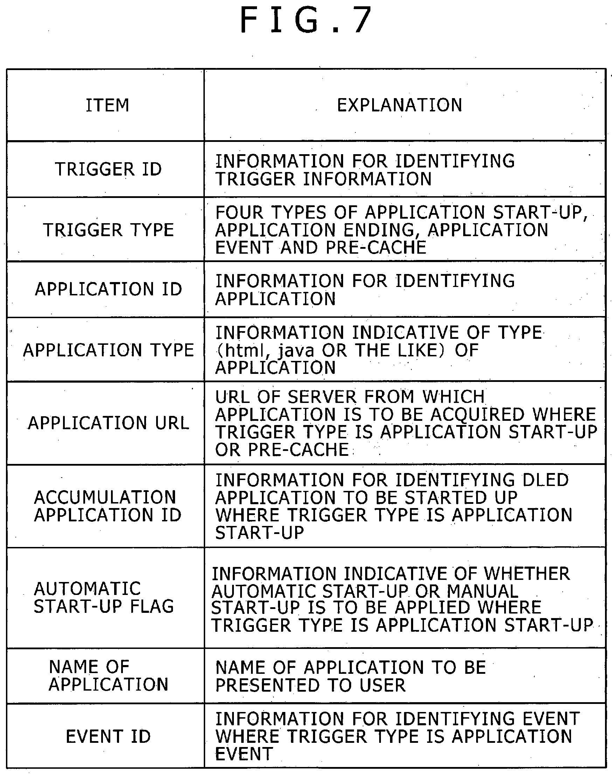

   FIG. 7 is a view illustrating an example of items included in the trigger information.
[FIG. 8]

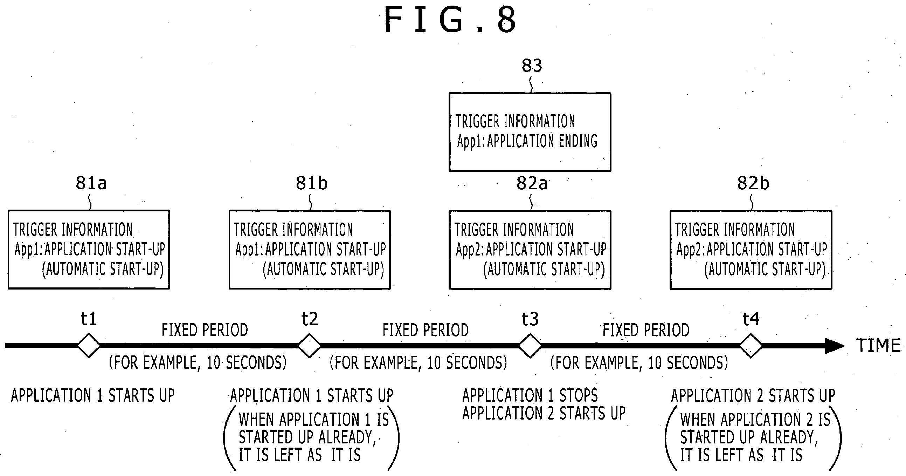

   FIG. 8 is a view illustrating an example of trigger information transmitted and received in a predetermined period.
[FIG. 9]

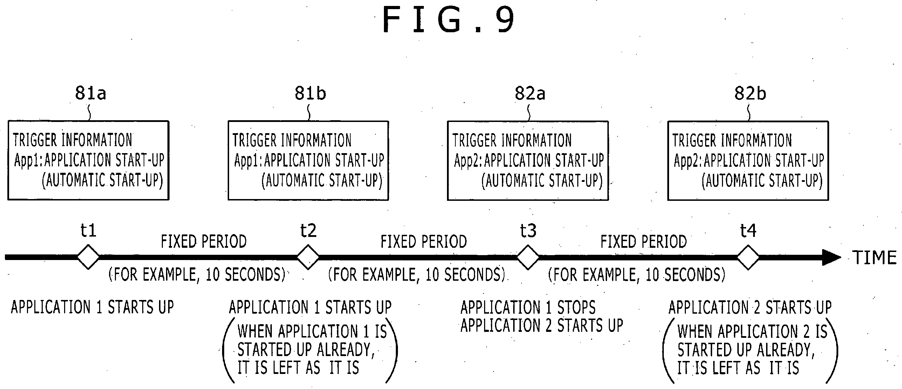

   FIG. 9 is a view illustrating another example of trigger information transmitted and received in a predetermined period.
[FIG. 10]

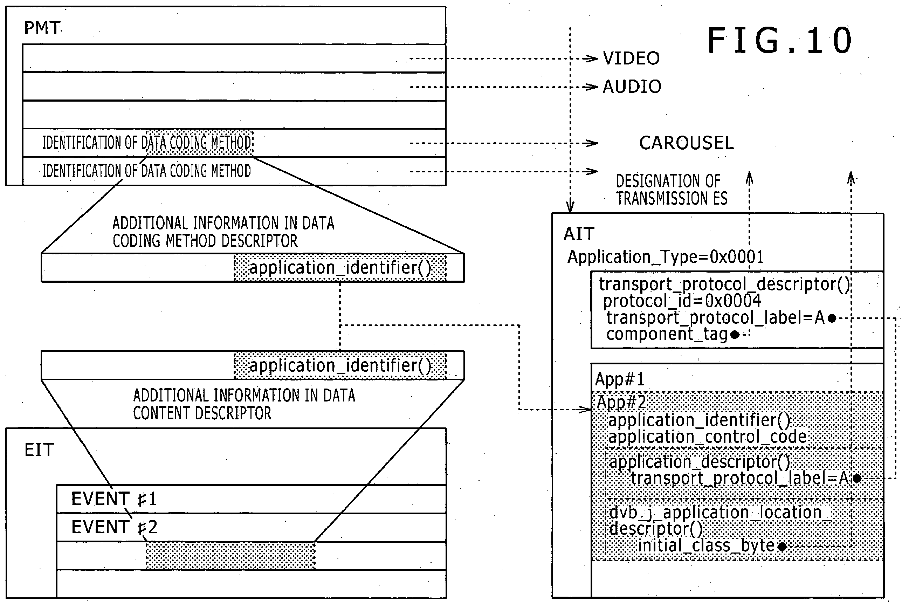

   FIG. 10 is a view illustrating an example of a PMT.
[FIG. 11]

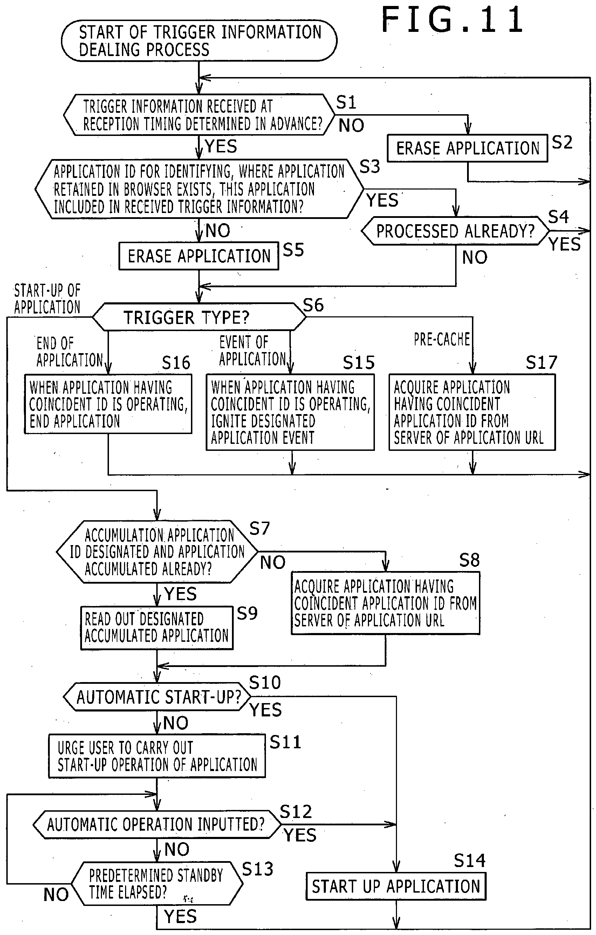

   FIG. 11 is a flow chart illustrating a trigger information dealing process.
[FIG. 12]

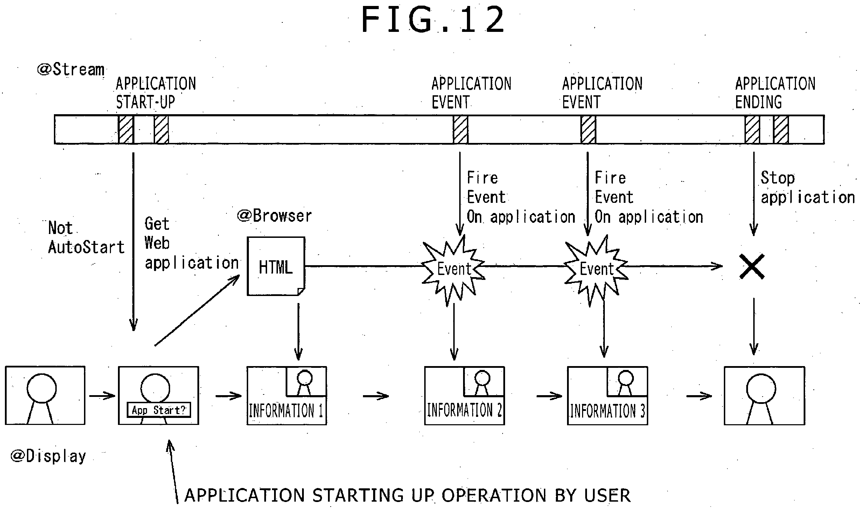

   FIG. 12 is a view illustrating an example of a screen display image when an application for data broadcasting is executed.
[FIG. 13]

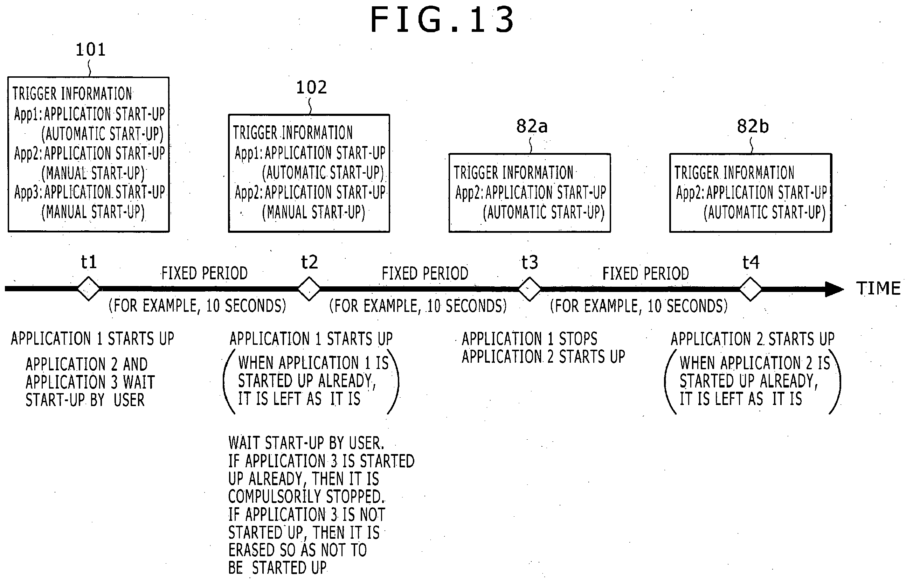

   FIG. 13 is a view illustrating a further example of trigger information transmitted and received in a predetermined period.
[FIG. 14]

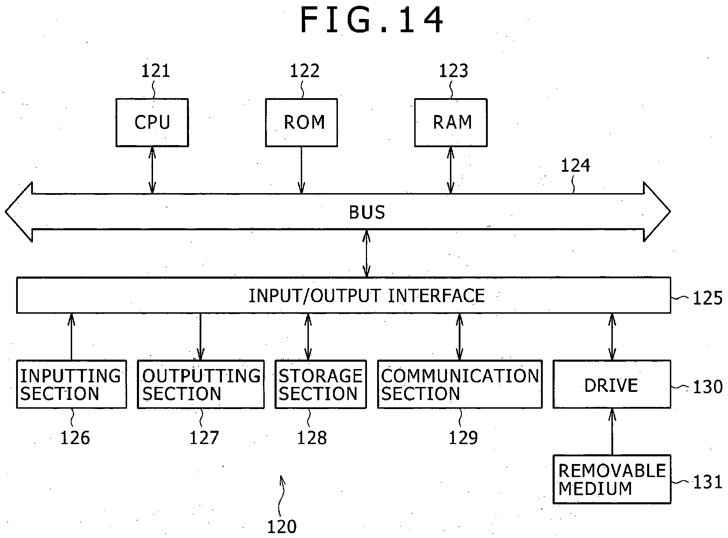

   FIG. 14 is a block diagram showing an example of a configuration of a computer.

### [Description of Embodiments]

In the following, the best mode (hereinafter referred to as embodiment) for carrying out the invention is described in detail with reference to the drawings.

### <1. Embodiment>

### [Example of the Configuration of the Broadcasting System]

FIG. 3 shows a broadcasting system of the present embodiment. This broadcasting system 30 implements, for example, in the United States at present, a service of content for data broadcasting which can be interlocked with AV content of a program without providing a band for broadcasting content for data broadcasting in a broadcasting band of digital television broadcasting.

This broadcasting system 30 is configured from a broadcasting apparatus 41 and a server 42 provided on the broadcasting station side, and a reception apparatus 60 provided on the receiver side.

The broadcasting apparatus 41 is configured to transmit a digital television broadcasting signal. The broadcasting band of this digital television broadcasting signal is occupied by a band for video, a band for audio and a band for control information as illustrated in A of FIG. 1 and has no band provided therein for broadcasting content for data broadcasting.

Further, the broadcasting apparatus 41 places trigger information into a packet (hereinafter referred to as PCR packet) including a PCR (Program Clock Reference) from among TS packets which configure a TS of a digital broadcasting signal and transmits the PCR packet in synchronism with a transmission timing determined in advance (transmission timing which is generated, for example, at intervals of 10 seconds).

Here, the trigger information is configured from information indicative of an execution timing of content for data broadcasting, information indicative of an acquisition destination of the content for data broadcasting, and so forth. The trigger information is hereinafter described in detail with reference to FIGS. 5 to 7.

The server 42 supplies content for data broadcasting and so forth in accordance with a request from the reception apparatus 60 from which the server 42 is accessed through the Internet 50.

The reception apparatus 60 receives a digital broadcasting signal transmitted thereto from the broadcasting apparatus 41, acquires a video and an audio of AV content corresponding to a television program, and outputs the video and the audio to a monitor (not shown). Further, the reception apparatus 60 accesses the server 42 through the Internet 50 to acquire content for data broadcasting.

Furthermore, the reception apparatus 60 receives a trigger signal placed in a PCR packet in synchronism with a reception timing determined in advance and corresponding to a transmission timing from the broadcasting apparatus 41 (for example, a reception timing which is generated at intervals of, for example, 10 seconds). It is to be noted that the transmission timing from the broadcasting apparatus 41 is determined in response to a reception timing by the reception apparatus 60 so that the trigger information may be received at a reception timing by the reception apparatus 60. A process carried out based on received trigger information by the reception apparatus 60 is hereinafter described in detail with reference to FIGS. 8 to 10.

It is to be noted that this reception apparatus 60 may exist as a sole unit or may be built, for example, in a television receiver, a video recorder or the like.

### [Example of the Configuration of the Reception Apparatus]

FIG. 4 shows an example of a configuration of the reception apparatus 60. The reception apparatus 60 is configured from a tuner 61, a demultiplexing section 62, an audio decoder 63, an audio outputting section 64, a video decoder 65, a trigger detection section 66, a video outputting section 67, a control section 68, a memory 69, an operation section 70, a recording section 71, a communication I/F 72, and a browser 73.

The tuner 61 receives and demodulates a digital television broadcasting signal corresponding to a channel selected by the user and outputs a resulting TS to the demultiplexing section 62. The communication I/F 72 demultiplexes the TS inputted thereto from the tuner 61 into an audio coded signal, a video coded signal and a control signal and outputs them to the audio decoder 63, video decoder 65 and control section 68, respectively.

Further, the demultiplexing section 62 extracts a PCR packet including trigger information disposed in the TS and outputs the extracted PCR packet to the control section 68.

The audio decoder 63 decodes the audio coded signal inputted thereto and outputs a resulting audio signal to the audio outputting section 64. The audio outputting section 64 outputs the audio signal inputted thereto to a succeeding stage (for example, to the monitor).

The video decoder 65 decodes the video coded signal inputted thereto and outputs a resulting video signal to the trigger detection section 66 and the video outputting section 67.

It is to be noted that, while it is described in the description of the present embodiment that the trigger information is placed in and transmitted together with a PCR packet of a TS by the broadcasting apparatus 41, the trigger signal may be, for example, embedded into and transmitted together with the video signal.

In this instance, the trigger detection section 66 supervises the video signal inputted thereto to detect the trigger information embedded in the video signal.

The video outputting section 67 outputs the video signal inputted thereto from the video decoder 65 to a succeeding stage (for example, to the monitor). Further, the video outputting section 67 synthesizes the video of content for data broadcasting inputted thereto from the browser 73 and the video signal inputted thereto from the video decoder 65 and outputs the synthesized signal to the succeeding stage. It is to be noted that outputting from the audio outputting section 64 and the video outputting section 67 to the succeeding stages can be carried out using, for example, a HDMI (High-Definition Multimedia Interface) cable.

The control section 68 executes a controlling program recorded in the memory 69 to control the entire reception apparatus 60. Further, the control section 68 controls, based on trigger information inputted thereto from the demultiplexing section 62 (or from the trigger detection section 66), acquisition, start-up, event ignition, ending, and so forth of an application program for implementing content for data broadcasting interlocked with a television program.

In the memory 69, the controlling program which is executed by the control section 68 is recorded. This controlling program can be updated based on updating data acquired through a digital television broadcasting signal or through the Internet 50. The operation section 70 accepts various operations,from the user and notifies the control section 68 of corresponding operation signals.

The recording section 71 retains, in the case where an application for data broadcasting is distributed using a digital television broadcasting signal, the downloaded data broadcasting application into a recording medium built therein.

The communication I/F 72 establishes a connection to the server 42 through the Internet 50 under the control of the browser 73. The browser 73 acquires an application program for data broadcasting (hereinafter referred to as data broadcasting application) from the server 42 through the communication I/F 72 and the Internet 50 under the control of the control section 68.

### [Details of the Trigger Information]

FIG. 5 illustrates a concept in the case where the tripper information is placed into a PCR packet of a TS and transmitted in synchronism with a transmission timing determined in advance (for example, at a transmission timing which is generated at intervals of 10 seconds). As illustrated in FIG. 5, the trigger information is not placed in all PCR packets but is placed in some PCR packet so that it is transmitted in synchronism with a transmission timing. Since the PCR packet usually passes through such a PID filter 12 of the CATV retransmission apparatus 2 as shown in FIG. 2, the trigger information can be conveyed also to a reception apparatus (digital television receiver 4 of FIG. 2) which utilizes a CATV network.

FIG. 6 indicates a position of a PCR packet at which the trigger information is placed. The PCR packet is a TS packet in whose adaptation_field a PCR is placed, and the trigger information (TriggerInfo_descriptor) is placed into transport_private_data_byte next to the PCR. It is to be noted that, when the trigger information is placed, transport_private_data_flag of Various_flags provided prior to the PCR is set to 1.

FIG. 7 illustrates an example of items of information included in the trigger information.

Trigger ID is information for identifying the trigger information. It is to be noted that, in the case where trigger information of the same substance is transmitted by a plural number of times, the trigger IDs of the trigger information are same as each other. Trigger type indicates which one of application start-up (which indicates acquisition and start-up of the data broadcasting application), application ending (which indicates ending of a data broadcasting application being executed), application event (which indicates ignition of an event (updating of the display substance or the like) in the data broadcasting application being executed) and pre-cache (which indicates only acquisition of the data broadcasting application) the trigger information is.

Application ID is information for identifying a data broadcasting application corresponding to the trigger information. Application type is information indicative of a type (for example, html, java or the like) of the data broadcasting application corresponding to the trigger information. Application URL (Uniform Resource Locator) is a URL of an acquisition destination (in the present case, the server 42) of a data broadcasting application in the case where the trigger type is application start-up or pre-cache. Accumulation application ID is described only in the case where immediate acquisition of a data broadcasting application is not carried out but a data broadcasting application accumulated already (acquired already) and to be started up in the case where the trigger type is application start-up.

Automatic start-up flag is described in the case where the trigger type is application start-up and is set to on or off. When the automatic start-up flag is on, automatic start-up (wherein a data broadcasting application is started up automatically) is applied. When the automatic start-up flag is off, manual start-up (wherein the user is urged to carry out an operation input and the data broadcasting application is started up in response to such an operation input).

Name of application is a name of a data broadcasting application to be presented to the user in the case where the automatic start-up flag is manual start-up or in a like case. Event ID is information for identifying, in the case where the trigger type is application event, the event. It is to be noted that the trigger information does not always include all items described above but includes only those of the items which are required at the timing.

FIG. 8 illustrates an example of processing carried out by the reception apparatus 60 based on trigger information received in synchronism with a reception timing determined in advance from the broadcasting apparatus 41.

It is to be noted that, in FIG. 8, for example, the reception apparatus 60 receives trigger information transmitted in synchronism with a transmission timing tn' (n = 1, 2, 3, 4, ...) from the broadcasting apparatus 41 in synchronism with a reception timing tn corresponding to the transmission timing tn'.

Here, in the case where a reaching time period after trigger information is transmitted in synchronism with the transmission timing tn' from the broadcasting apparatus 41 until it is received in synchronism with the reception timing tn by the reception apparatus 60 is represented by a, the reception timing tn is a timing when the reaching time a elapses after the transmission timing tn'.

Further, description is given assuming that, in FIG. 8, the transmission timing tn' and the reception timing tn are generated in a predetermined period (for example, after every 10 seconds).

It is to be noted that the transmission timing tn' and the reception timing tn may be any timings without being restricted by the predetermined period. In other words, for example, the reception timings tn may be such that a reception timing t2 is generated after 5 seconds from a reception timing t1; a reception timing t3 is generated after 7 seconds from the reception timing t2; and a reception timing t4 is generated after 9 seconds from the reception timing t3. This similarly applies also to the transmission timing tn'.

Referring to FIG. 8, trigger information 81a is transmitted in synchronism with the transmission timing t1' from the broadcasting apparatus 41 and is received in synchronism with the reception timing t1 by the reception apparatus 60. The trigger information 81a includes, in addition to a trigger ID and so forth, at least an application ID for identifying the data broadcasting application App1, a trigger type indicative of application start-up and an automatic start-up flag indicative of automatic start-up.

Trigger information 81b is information same as the trigger information 81a and is transmitted in synchronism with the transmission timing t2' from the broadcasting apparatus 41 and received in synchronism with the reception timing t2 by the reception apparatus 60.

Further, in FIG. 8, trigger information 82a is transmitted in synchronism with the transmission timing t3' from the broadcasting apparatus 41 and received in synchronism with the reception timing t3 by the reception apparatus 60. The trigger information 82a includes, in addition to a trigger ID and so forth, at least an application ID for identifying a data broadcasting application App2, a trigger type indicative of application start-up and an automatic start-up flag indicative of automatic start-up.

Trigger information 82b is information same as the trigger information 82a and is transmitted in synchronism with the transmission timing t4' from the broadcasting apparatus 41 and received in synchronism with the reception timing t4 by the reception apparatus 60.

Further, in FIG. 8, trigger information 83 is transmitted in synchronism with the transmission timing t3' from the broadcasting apparatus 41 and received in synchronism with the reception timing t3 by the reception apparatus 60. The trigger information 83 includes, in addition to a trigger ID and so forth, at least an application ID for identifying a data broadcasting application App1 and a trigger type indicative of application ending.

For example, the broadcasting apparatus 41 transmits the trigger information 81a placed in a PCR packet in synchronism with the transmission timing t1'. On the other hand, the reception apparatus 60 receives the trigger information 81a from the broadcasting apparatus 41 in synchronism with the reception timing t1. Then, the trigger information 81a received by the reception apparatus 60 is inputted to the control section 68 through the tuner 61 and the demultiplexing section 62.

The control section 68 controls the browser 73 based on the trigger information 81a inputted thereto to start up the data broadcasting application App1 designated by the application ID included in the trigger information 81a.

Further, for example, the broadcasting apparatus 41 transmits the trigger information 81b placed in a PCR packet in synchronism with the transmission timing t2'. On the other hand, the reception apparatus 60 receives the trigger information 81b from the broadcasting apparatus 41 in synchronism with the reception timing t2. Then, in the reception apparatus 60, the received trigger information 81b is inputted to the control section 68 through the tuner 61 and the demultiplexing section 62.

The control section 68 controls, in the case where the trigger information 81b inputted thereto designates the data broadcasting application App1 started up already, such that the data broadcasting application App1 started up based on the trigger information 81a continues to operate as it is.

In particular, for example, in the case where the reception apparatus 60 receives, at the reception timing tn, trigger information (in the present case, the trigger information 81b) having the substance same as that of the trigger information (in the present case, the trigger information 81a) received at the reception timing tn-1 in the preceding cycle, the reception apparatus 60 does not carry out a process based on the trigger information received at the reception timing tn.

In particular, for example, in the reception apparatus 60, if the data broadcasting application App1 is retained in the memory (not shown) built in the browser 73, then the control section 68 controls so as to maintain the retained state. Or, for example, when the data broadcasting application App1 is being executed by the browser 73, the control section 68 controls so as to maintain the executed state.

It is to be noted that, in the case where the reception apparatus 60 cannot receive the trigger information 81a in synchronism with the reception timing t1, when the trigger information 81b is received at the reception timing t2, the control section 68 controls the browser 73 based on the trigger information 81b to start up the data broadcasting application App1 designated by the trigger information 81b.

Further, for example, the broadcasting apparatus 41 transmits the trigger information 82a and the trigger information 83 placed in a PCR packet in synchronism with the transmission timing t3', On the other hand, the reception apparatus 60 receives the trigger information 82a and the trigger information 83 from the broadcasting apparatus 41 in synchronism with the reception timing t3. Then, the trigger information 82a and the trigger information 83 received by the reception apparatus 60 are inputted to the control section 68 through the tuner 61 and the demultiplexing section 62.

The control section 68 ends (stops) the data broadcasting application App1 during operation based on the trigger information 83 inputted thereto. Further, the control section 68 controls the browser 73 based on the trigger information 82a inputted thereto to start up the data broadcasting application App2 designated by the application ID included in the trigger information 82a.

In particular, for example, in the case where the reception apparatus 60 receives, at the reception timing tn, trigger information (in the present case, the trigger information 83 or the trigger information 82a) having the substance different from that of the trigger information (in the present case, the trigger information 81b) received at the reception timing tn-1 in the preceding cycle, the reception apparatus 60 carries out processing based on the trigger information received at the reception timing tn.

Further, for example, the broadcasting apparatus 41 transmits the trigger information 82b placed in the PCR packet in synchronism with the transmission timing t4'. On the other hand, the reception apparatus 60 receives the trigger information 82b from the broadcasting apparatus 41 in synchronism with the reception timing t4. Then, the trigger information 82b received by the reception apparatus 60 is inputted to the control section 68 through the tuner 61 and the demultiplexing section 62.

The control section 68 controls, in the case where the trigger information 82b inputted thereto designates the data broadcasting application App2 started up already, the data broadcasting application App2 designated by the trigger information 82B to operate as it is.

It is to be noted that, in the case where the reception apparatus 60 cannot receive the trigger information 82a in synchronism with the reception timing t3, when it receives the trigger information 82b at the reception timing t4, the control section 68 controls the browser 73 based.on the trigger information 82b to start up the data broadcasting application App2 designated by the trigger information 82b.

Incidentally, in FIG. 8, in the case where the reception apparatus 60 continues to receive trigger information (the trigger information 81a and 81b), which designates the data broadcasting application App1, in synchronism with the reception timings t1 and t2, it waits to receive the trigger information 83 in synchronism with the reception timing t3 to end the data broadcasting application App1.

Or, for example, in the case where the reception apparatus 60 continues to receive the trigger information (trigger information 81a and 81b), which designates the data broadcasting application App1, in synchronism with the reception timings t1 and t2, the reception apparatus 60 may end the data broadcasting application App1 in response to that the trigger information which designates the data broadcasting application App1 is not received any more in synchronism with the reception timing t3 as illustrated in FIG. 9.

In the case where such control as illustrated in FIG. 9 is used, different from the case in which such control as illustrated in FIG. 8 is used, the reception apparatus 60 can end the data broadcasting application App1 at the reception timing t3 without waiting that the trigger information 83 is received. It is to be noted that, after the data broadcasting application App1 is ended, the data broadcasting application App1 may be erased from the reception apparatus 60 so that it may not be started up again.

Further, since the reception apparatus 60 receives trigger information in synchronism with the reception timing tn, only it is necessary for the reception apparatus 60 to supervise the PCR packet received in synchronism with the reception timing tn to decide whether or not trigger information is included in the PCR packet. Therefore, for example, different from the case wherein trigger information is suitably placed into and transmitted together with a PCR packet, the necessity to always supervise a received PCR packet to detect whether or not trigger information is placed in the received PCR packet is eliminated.

Incidentally, in the case-where the broadcasting apparatus 41 transmits trigger information in synchronism with the transmission timing tn', such a situation that trigger information from the broadcasting apparatus 41 cannot be received in synchronism with the reception timing tn possibly occurs.

In this instance, the reception apparatus 60 decides that trigger information is not received in synchronism with the reception timing tn, and such a situation that the reception apparatus 60 fails to acquire trigger information from the broadcasting apparatus 41 may possibly occur.

Accordingly, in the case where the reception apparatus 60 receives trigger information from the broadcasting apparatus 41 within a reception period determined based on the reception timing tn, preferably it is decided that trigger information is received in synchronism with the reception timing tn.

It is to be noted that, as the reception period, for example, a period from Δt₁ seconds before the reception timing tn to Δt₂ seconds after the reception timing tn, a period from Δt₁ seconds before the reception timing tn to the reception timing tn, a period from the reception timing tn to Δt₂ seconds after the reception timing tn and so forth can be adopted.

In this instance, even if the reception apparatus 60 does not receive trigger information at the reception timing tn, if it receives trigger information within the perception period, then since it is decided that trigger signal is received at the reception timing tn, failure to acquire trigger information from the broadcasting apparatus 41 can be prevented.

Further, the broadcasting apparatus 41 may not transmit trigger information only once in synchronism with the transmission timing tn' but may transmit the same trigger information successively by a plural number of times so that the reception apparatus 60 can receive the trigger information at the reception timing tn with a higher degree of accuracy. By this, a plurality of pieces of trigger information which are same as each other are successively transferred to the reception apparatus 60, for example, in synchronism with the transmission timing tn'.

Therefore, since the reception apparatus 60 can improve the accuracy of acquisition of trigger information at the reception timing tn, it becomes possible to prevent failure in acquisition of trigger information.

Here, it seems a possible idea not to place and transmit trigger information into and together with a PCR packet but to place trigger information into an AIT (Application Information Table) and periodically transmit the trigger information from the broadcasting apparatus 41.

However, in this instance, an ES (elementary stream) for transmitting the AIT must be provided separately in the TS. Further, for example, the AIT is configured such that it is disposed in a PMT (Program Map Table) as illustrated in FIG. 10.

Accordingly, for example, in the case where trigger information is placed into and transmitted together with an AIT, the reception apparatus 60 must carry out such a complicated process as to extract the AIT from a PMT included in the TS and further extract the trigger information from the extracted AIT.

In contrast, in the present embodiment, since trigger information is included into and transmitted together with a PCR packet, there is no necessity to separately provide an ES for transmitting an AIT in a TS. Further, since, in the present embodiment, trigger information is included not into an AIT but into and transmitted together with a PCR packet, only it is necessary for the reception apparatus 60 to extract the trigger information from a PCR packet included in the TS.

### [Description of the Operation]

Now, a trigger information dealing process carried out by the reception apparatus 60 is described.

FIG. 11 is a flow chart illustrating the trigger information dealing process. The trigger information dealing process is repetitively executed when the user is viewing a television program, namely, while a digital television broadcasting signal is received.

It is to be noted that, for the convenience of description, it is assumed that, in the trigger information dealing process, one piece of trigger information (information which designates one data broadcasting application) is transmitted from the broadcasting apparatus 41 at a transmission timing tn'.

At step S1, the control section 68 decides, based on an input from the demultiplexing section 62, whether or not a PCR packet which includes trigger information is received in synchronism with a reception timing tn determined in advance. Then, in the case where a PCR packet which includes trigger information is not received in synchronism with the reception timing tn, the processing is advanced to step S2.

At step S2, in the case where a data broadcasting application retained already exists in (a memory not shown and built in) the browser 73, the control section 68 erases the retained data broadcasting application and returns the processing to step S1 so that the processes beginning with step S1 are carried out similarly.

On the other hand, in the case where a PCR packet which includes trigger information is received in synchronism with the reception timing tn at step S1, the processing advances to step S3.

At step S3, the control section 68 extracts the trigger information from the received PCR packet. Then, in the case where a data broadcasting application acquired from the server 42 or the like and retained already in the browser 73 exists, the control section 68 decides whether or not the extracted trigger information includes an application ID for identifying the data broadcasting application retained already in the browser 73.

It is to be noted that, in the case where there is no data broadcasting application retained already in the browser 73 at step S3, processes at step S4 and step S5 are skipped to advance the processing to step S6.

In the case where it is decided at step S3 that the extracted trigger information includes an application ID for identifying the data broadcasting application retained already in the browser 73, the processing advances to step S4.

At step S4, the control section 68 decides, based on the trigger information, whether or not processes after step S6 have been executed already in accordance with the trigger information. In particular, for example, in the case where trigger information which includes a trigger type same as that included in trigger information received at the reception timing tn-1 in the preceding cycle is received, the control section 68 decides that the processes after step S6 have been executed already.

Further, for example, in the case where trigger information which includes a trigger type different from that included in the trigger information received at the reception timing tn-1 in the preceding cycle is received, the control section 68 decides that the processes after step S6 have not yet been executed.

In the case where it is decided that the processes after step S6 have been executed already, a state (for example, an execution state or a retention state) of the data broadcasting application retained already in the browser 73 is maintained, and the processing is returned to step S1 so that the processes beginning with step S1 are repetitively carried out similarly. On the contrary, in the case where it is decided that the processes after step S6 have not been executed for the trigger information, the processing is advanced to step S6.

On the other hand, in the case where it is decided at step S3 that the extracted trigger information does not include an application ID for identifying the data broadcasting application retained already in the browser 73, the processing advances to step S5.

At step S5, the control section 68 erases the data broadcasting application retained already in the browser 73.

In particular, for example, in the case where the data broadcasting application is pre-cached already (retained already) in the browser 73 through a process at step S17 hereinafter described, the control section 68 erases the data broadcasting application pre-cached in the browser 73.

Further, for example, where the data broadcasting application retained already in the browser 73 is operating, the control section 68 ends and erases the data broadcasting application from the browser 73. It is to be noted that, in the case where the data broadcasting application retained already in the browser 73 is operating, the control section 68 may carry out ending of the data broadcasting application but may not carry out a process for erasing the data broadcasting application from the browser 73.

Thereafter, the processing is advanced from step S5 to step S6, and, at step S6, the control section 68 decides which one of application start-up, application event, application ending and pre-cache the trigger type of the trigger information is.

In the case where it is decided at step S6 that the trigger type of the trigger information is application start-up, the processing is advanced to step S7. At step S7, the control section 68 decides whether or not an accumulation application ID is designated by the trigger information and a data broadcasting application corresponding to the designated ID is accumulated already in the recording section 71. In the case where it is decided here that the dealing data broadcasting application is not accumulated, the processing advances to step S8. At step S8, the control section 68 controls the browser 73 to access the server 42 corresponding to the application URL of the trigger information to acquire the data broadcasting application corresponding to (designated by) the application ID of the trigger information and then retain the acquired data broadcasting application into the memory built in the browser 73. Here, in the case where, at step S17 hereinafter described, the pertaining data broadcasting application is acquired and pre-cached already from the server 42 corresponding to the URL described above by the browser 73 (the data broadcasting application is retained already in the memory built in the browser 73), the process at step S8 is skipped to advance the processing to step S10.

On the contrary, in the case where it is decided at step S7 that the accumulation application ID is designated by the trigger information and besides the data broadcasting application corresponding to the designated ID is accumulated already in the recording section 71, the processing is advanced to step S9. At step S9, the control section 68 controls the browser 73 to read out the data broadcasting application corresponding to the accumulation application ID of the trigger information from the recording section 71 and then retain the read out data broadcasting application into the memory of the browser 73. Thereafter, the processing advances to step S10.

At step S10, the control section 68 decides whether or not the automatic start-up flag of the trigger information is automatic start-up.

In the case where it is decided at step S10 that the automatic start-up flag of the trigger information is not automatic start-up (namely, is manual start-up), the processing is advanced to step S11. At step S11, the browser 73 causes the display apparatus to display, for example, a screen image of "execute (name of application)?" or the like under the control of the control section 68 to urge the user to carry out a start-up operation of the data broadcasting application. In the case where it is decided at step S12 that a start-up operation is inputted by the user in response to the urging display, the processing is advanced to step 14. At step S14, the browser 73 starts up the data broadcasting application retained already at step S8, step S9 or step S17 under the control of the control section 68. Thereafter, the processing is returned to step S1 so that the processes beginning with step S1 are carried out repetitively.

It is to be noted that, in the case where, after the urging display at step S11, it is decided at step 12 that a start-up operation from the user is not inputted and it is decided at step S13 that a predetermined time period elapses while a start-up operation from the user is not inputted, the processing returns to step S1 so that the processes beginning with step S1 are carried out repetitively.

It is to be noted that, in the case where it is decided at step S10 that the automatic start-up flag of the trigger information is automatic start-up, the processing is advanced to step S14. At step S14, the browser 73 starts up the data broadcasting application retained already at step S8, step S9 or step S17 under the control of the control section 68. Thereafter, the processing returns to step S1 so that the processes beginning with step S1 are carried out repetitively.

In the case where it is decided at step S6 that the trigger type of the trigger information is application event, the processing is advanced to step S15. At step S15, only in the case where the application ID of the trigger information and the application ID of the operating data broadcasting application coincide with each other, the control section 68 controls the browser 73 to ignite (execute) an event corresponding to the event ID of the trigger information in the operating application. Thereafter, the processing returns to step S1 so that the processes beginning with step S1 are carried out repetitively.

In the case where it is decided at step S6 that the trigger type of the trigger information is application ending, the processing is advanced to step S16. At step S16, only in the case where the application ID of the trigger information and the application ID of the operating data broadcasting application coincide with each other, the control section 68 controls the browser 73 to end the operating data broadcasting application. It is to be noted that, after the operating data broadcasting application is ended, the data broadcasting application may be erased from the browser 73. Thereafter, the processing returns to step S1 so that the processes beginning with step S1 are carried out repetitively.

In the case where it is decided at step S6 that the trigger type of the trigger information is pre-cache, the processing is advanced to step S17. At step S17, the control section 68 controls the browser 73 to access the server 42 corresponding to the application URL of the trigger information to acquire the data broadcasting application corresponding to the application ID of the trigger information and store the acquired application into the storage section such as a memory or the like included in the browser 73. Thereafter, the processing returns to step S1 so that the processes beginning with step S1 are carried out repetitively.

If the trigger type is pre-cache as at step S17, then the corresponding data broadcasting application can be acquired before broadcasting time of a television program which is desired to be interlocked. Consequently, the corresponding data broadcasting application can be executed at the same time with starting of the television program desired to be interlocked. Further, also an effect can be expected that access concentration upon the server 42 is dispersed. The description of the trigger information dealing process ends therewith.

As described above, according to the trigger information dealing process, in the case where it is decided at step S3 that the extracted trigger information does not include an application ID for identifying a data broadcasting application retained already in the browser 73, the control section 68 erases the data broadcasting application retained already in the browser 73 at step S5.

Accordingly, with the present trigger information dealing process, the data broadcasting application retained already in the browser 73 can be erased without waiting that trigger information which indicates erasure of the data broadcasting application retained already in the browser 73 is received.

### [Example of a Screen Display Image When the Data Broadcasting Application Is Executed]

FIG. 12 illustrates a transition of the screen image when, in the case where the automatic start-up flag of trigger information is off (manual start-up), a data broadcasting application is executed in an interlocked relationship with the progress of a television program.

If trigger information wherein the trigger type is application start-up and the automatic start-up flag is off (manual start-up) is received, then a corresponding data broadcasting application is acquired. Then, a display image which urges the user to carry out a start-up operation of the data broadcasting application is displayed in a superposed relationship with a video of a television program. If the user inputs a start-up operation in response to the urge, then the data broadcasting application is started up, and the screen display image becomes a synthesized video of the video corresponding to the data broadcasting application and the video of the television program.

If trigger information wherein the trigger type is application event is received in the state in which the data broadcasting application is executed, then an event corresponding to the event ID of the trigger information is ignited in the data broadcasting application being executed. Consequently, from within the screen display image, the video in a region corresponding to the data broadcasting application is changed to a video corresponding to the event ID of the trigger information.

Thereafter, if trigger information wherein the trigger type is application ending is received or if the trigger information which designates the operating data broadcasting application is not received any more, then the data broadcasting application being executed is ended and the video of the television program is displayed over the overall screen.

As described above, according to the broadcasting system 30 to which the present invention is applied, trigger information relating to data broadcasting is placed into a PCR packet or embedded into a video signal and transmitted together with the PCR packet or video signal, and a data broadcasting application is supplied from a server through the Internet. Therefore, a service of data broadcasting content which can be interlocked with a television program can be implemented without providing a band for data broadcasting in a broadcasting band of digital television broadcasting.

Further, also in the case where a digital television program is retransmitted through a CATV network, a communication satellite network or the like, a service of data broadcasting content which can be interlocked with a television program can be implemented.

In the embodiment described above, the trigger information is information for controlling a process relating to one data broadcasting application (for example, the trigger information 81a of FIG. 8 or the like). However, the trigger information is not limited to this.

In particular, for example, trigger information 101 for controlling a process relating to a plurality of data broadcasting applications App1, App2 and App3 or trigger information 102 for controlling a process relating to a plurality of data broadcasting applications App1 and App2 as illustrated in FIG. 13 may be used.

Incidentally, while the series of processes described above can be executed by hardware, it may otherwise be executed by software. In the case where the series of processes is executed by software, a program which constructs the software is installed from a program recording medium into a computer incorporated in hardware for exclusive use or, for example, a personal computer for universal use which can execute various functions by installing various programs or the like.

### [Example of the Configuration of the Computer]

FIG. 14 is a block diagram showing an example of a hardware configuration of a computer which executes the series of processes described hereinabove in accordance with a program.

In the present computer 100, a CPU (Central Processing Unit) 101, a ROM (Read Only Memory) 102 and a RAM (Random Access Memory) 103 are connected to each other by a bus 104.

Further, an input/output interface 105 is connected to the bus 104. To the input/output interface 105, an inputting section 106 configured from a keyboard, a mouse, a microphone and so forth, an outputting section 107 configured from a display unit, a speaker and so forth, a storage section 108 configured from a hard disk, a nonvolatile memory and so forth, a communication section 109 configured from a network interface and so forth, and a drive 110 for driving a removable medium 111 such as a magnetic disk; an optical disk, a magneto-optical disk or a semiconductor memory are connected.

In the computer configured in such a manner as described above, the CPU 101 carries out the series of processes described hereinabove, for example, by loading the program stored in the storage section 108 into the RAM 103 through the input/output interface 105 and the bus 104 and executing the program.

It is to be noted that the program which is executed by the computer may be a program by which the processes are executed in a time series in the order as described in the present specification or may be a program by which the processes are executed in parallel or at a necessary timing such as when the program is called.

Further, the program may be processed by a single computer or may be processed in a distributed manner by a plurality of computers. Further, the program may be transferred to and executed by a computer at a remote place.

Further, in the present specification, the term system is used to represent an entire apparatus composed of a plurality of devices.

It is to be noted that the embodiment of the present invention is not limited to the embodiment described hereinabove but can be changed in various manners without departing from the subject matter of the present invention.

### [Reference Signs List]

- 30: Broadcasting system
- 41: Broadcasting apparatus
- 42: Server
- 60: Reception apparatus
- 61: Tuner
- 62: Demultiplexing section
- 63: Audio decoder
- 64: Audio outputting section
- 65: Video decoder
- 66: Trigger detection section
- 67: Video outputting section
- 68: Control section
- 69: Memory
- 70: Operation section
- 71: Recording section
- 72: Communication I/F
- 73: Browser

## Claims

1. A reception apparatus configured to receive AV content, comprising:
reception means for receiving trigger information for controlling a process relating to an application program to be executed in an interlocked relationship with the progress of the AV content;
retaining means for retaining the application program; and
control means for controlling a state of a first application program retained by the retaining means in response to whether or not first trigger information for designating a process relating to the first application program as a controlling target is received in synchronism with a reception timing determined in advance, said trigger information being included in a Program Clock Reference, PCR, packet,
wherein the control means is configured to erase the first application program from the retaining means in response to that the first trigger information is no more received in synchronism with the reception timing.

2. The reception apparatus according to claim 1, wherein the control means is configured to end the first application program being executed and to erase the first application program from the retaining means in response to that the first trigger information is no more received in synchronism with the reception timing.

3. The reception apparatus according to any one of claims 1 to 2, wherein the control means is configured to control a state of the first application program in response to whether or not the first trigger information is received in synchronism with the reception timing within a reception period based on the reception timing.

4. The reception apparatus according to any one of claims 1 to 2, wherein, in the case where the first trigger information is received in synchronism with the reception timing, the control means is configured to:
maintain, when the first trigger information same as the first trigger information received in synchronism with the reception timing in the preceding cycle is received, an execution state in the first application program being executed or maintains a retained state of the first application program retained in the retaining
means; and
control, when the first trigger information including a trigger type different from that included in the first trigger information received in synchronism with the reception timing in the preceding cycle is received, start-up of the first application program, ignition of an event in the first application program being executed or ending of the first application program being executed based on the trigger type included in the received first trigger information.

5. The reception apparatus according to any one of claims 1 to 2, wherein, in the case where the first application program is not retained in the retaining means, when the first trigger information is received, the control means is configured to control the retaining means to retain the first application program based on a trigger type included in the first trigger information.

6. A reception method for a reception apparatus configured to receive AV content, the reception method comprising steps to be executed by the reception apparatus and including:
a reception step of receiving trigger information for controlling a process relating to an application program to be executed in an interlocked relationship with the progress of the AV content; and
a controlling step of controlling a state of a first application program retained by a retaining section for retaining the application program depending upon whether or not first trigger information, which designates a process relating to the first application program as a controlling target, is received in synchronism with a reception timing determined in advance, said trigger information being included in a Program Clock Reference, PCR, packet,
wherein in the controlling step the first application program is erased from the retaining means in response to that the first trigger information is no more received in synchronism with the reception timing.

7. A program for controlling a reception apparatus configured to receive AV content, the program causing a computer of the reception apparatus to execute a process comprising:
a reception step of receiving trigger information for controlling a process relating to an application program to be executed in an interlocked relationship with the progress of the AV content; and
a controlling step of controlling a state of a first application program retained by a retaining section for retaining the application program depending upon whether or not first trigger information, which designates a process relating to the first application program as a controlling target, is received in synchronism with a reception timing determined in advance, said trigger information being included in a Program Clock Reference, PCR, packet;
wherein in the controlling step the first application program is erased from the retaining means in response to that the first trigger information is no more received in synchronism with the reception timing.

8. A broadcasting system configured from a transmission apparatus configured to transmit AV content and a reception apparatus configured to receive the transmitted AV content, wherein the transmission apparatus includes:
transmission means for transmitting trigger information for controlling a process relating to an application program to be executed by the reception apparatus in an interlocked relationship with the progress of the AV content in synchronism with a transmission timing corresponding to a reception timing determined in advance by the reception apparatus, said trigger information being included in a Program Clock Reference, PCR, packet;
and the reception apparatus includes:
reception means for receiving the trigger information for controlling a process relating to the application program to be executed in an interlocked relationship with the progress of the AV content, said trigger information being included in a Program Clock Reference, PCR, packet;
retaining means for retaining the application program; and
control means for controlling a state of a first application program retained by the retaining means in response to whether or not first trigger information for designating a process relating to the first application program as a controlling target is received in synchronism with a reception timing determined in advance, said trigger information being included in a Program Clock Reference, PCR, packet,
wherein the control means is configured to erase the first application program from the retaining means in response to that the first trigger information is no more received in synchronism with the reception timing.

9. The broadcasting system according to claim 8, whereon the transmission means is configured to transmit the trigger information in synchronism with the transmission timing at which the trigger information is received by the reception apparatus within a reception period based on the reception timing.

10. The broadcasting system according to claim 9, wherein the transmission means is configured to transmit a plurality of pieces of the trigger information in synchronism with the transmission timing at which at least one of the plural pieces of the trigger information is received by the reception apparatus within the reception period.

## Patentansprüche

1. Empfangsvorrichtung zum Empfangen von AV-Inhalt mit:
Empfangsmitteln zum Empfangen einer Triggerinformation zum Steuern eines Prozesses in Bezug auf ein Anwendungsprogramm, welches in einer verzahnten Beziehung mit dem Fortschritt des AV-Inhalts auszuführen ist;
Sicherungsmitteln zum Sichern des Anwendungsprogramms; und
Steuermitteln zum Steuern eines Zustands eines ersten Anwendungsprogramms, das von den Sicherungsmitteln gesichert ist, als Antwort darauf, ob eine erste Triggerinformation zum Bezeichnen eines Prozesses in Bezug auf das erste Anwendungsprogramm als ein Steuerungszielobjekt synchron mit einem im Voraus bestimmten Empfangstiming empfangen wird oder nicht, wobei die Triggerinformation in einem Program Clock Reference, PCR, Paket enthalten ist,
wobei die Steuermittel ausgestaltet sind, das erste Anwendungsprogramm aus den Sicherungsmitteln zu löschen als Antwort darauf, dass die erste Triggerinformation nicht mehr synchron mit dem Empfangstiming empfangen wird.

2. Empfangsvorrichtung nach Anspruch 1,
wobei die Steuermittel ausgestaltet sind, das erste ausgeführte Anwendungsprogramm zu beenden und das erste Anwendungsprogramm aus den Sicherungsmitteln zu löschen als Antwort darauf, dass die erste Triggerinformation nicht mehr synchron mit dem Empfangstiming empfangen wird.

3. Empfangsvorrichtung nach einem der Ansprüche 1 und 2, wobei die Steuermittel ausgestaltet sind, einen Zustand des ersten Anwendungsprogramms zu steuern als Antwort darauf, ob die erste Triggerinformation synchron mit dem Empfangstiming innerhalb eines Empfangszeitraums basierend auf dem Empfangstiming empfangen wird oder nicht.

4. Empfangsvorrichtung nach einem der Ansprüche 1 bis 2, wobei, für den Fall, dass die erste Triggerinformation synchron mit dem Empfangstiming empfangen wird, die Steuermittel ausgestaltet sind, um:
einen Ausführungszustand in dem ersten ausgeführten Anwendungsprogramm beizubehalten, wenn die erste Triggerinformation die gleiche ist wie die erste Triggerinformation, die synchron mit dem Empfangstiming in dem vorherigen Zyklus empfangen wurde, oder einen gesicherten Zustand des ersten in den Sicherungsmitteln gesicherten Anwendungsprogramms beizubehalten; und
Starten des ersten Anwendungsprogramms, Zünden eines Events in dem ersten ausgeführten Anwendungsprogramm oder Beendigen des ersten ausgeführten Anwendungsprogramms basierend auf dem in der empfangenen ersten Triggerinformation enthaltenen Triggertyp zu steuern, wenn die erste Triggerinformation enthaltend einen Triggertyp, der verschieden ist von demjenigen, der in der ersten synchron mit dem Empfangstiming empfangenen Triggerinformation in dem vorherigen Zyklus empfangen wurde, empfangen wird.

5. Empfangsvorrichtung nach einem der Ansprüche 1 und 2, wobei für den Fall, dass das erste Anwendungsprogramm nicht in den Sicherungsmitteln gesichert ist, wenn die erste Triggerinformation empfangen wird, die Steuermittel ausgestaltet sind, die Sicherungsmittel zu steuern, das erste Anwendungsprogramm basierend auf einem in der ersten Triggerinformation enthaltenen Triggertyp zu sichern.

6. Empfangsverfahren für eine Empfangsvorrichtung, die zum Empfangen von AV-Inhalt ausgestaltet ist, wobei das Empfangsverfahren durch die Empfangsvorrichtung auszuführende Schritte enthält und umfasst:
einen Empfangsschritt zum Empfangen einer Triggerinformation zum Steuern eines Prozesses in Bezug auf ein Anwendungsprogramm, welches in einer verzahnten Beziehung mit dem Fortschritt des AV-Inhalts auszuführen ist;
einen Steuerungsschritt zum Steuern eines Zustands eines in einer Sicherungseinheit gesicherten ersten Anwendungsprogramms zum Sichern des Anwendungsprogramms abhängig davon, ob eine erste Triggerinformation zum Bezeichnen eines Prozesses in Bezug auf das erste Anwendungsprogramm als ein Steuerungszielobjekt synchron mit einem im Voraus bestimmten Empfangstiming empfangen wird oder nicht, wobei die Triggerinformation in einem Program Clock Reference, PCR, Paket enthalten ist,
wobei in dem Steuerungsschritt das erste Anwendungsprogramm gelöscht wird von den Sicherungsmitteln als Antwort darauf, dass die erste Triggerinformation nicht mehr synchron mit dem Empfangstiming empfangen wird.

7. Programm zum Steuern einer zum Empfangen von AV-Inhalt ausgestalteten Empfangsvorrichtung, wobei das Programm einen Computer der Empfangsvorrichtung veranlasst, ein Verfahren auszuführen mit:
einem Empfangsschritt zum Empfangen einer Triggerinformation zum Steuern eines Prozesses in Bezug auf ein Anwendungsprogramm, welches in einer verzahnten Beziehung mit dem Fortschritt des AV-Inhalts auszuführen ist;
einem Steuerungsschritt zum Steuern eines Zustands eines in einer Sicherungseinheit gesicherten ersten Anwendungsprogramms zum Sichern des Anwendungsprogramms abhängig davon, ob eine erste Triggerinformation zum Bezeichnen eines Prozesses in Bezug auf das erste Anwendungsprogramm als ein Steuerungszielobjekt synchron mit einem im Voraus bestimmten Empfangstiming empfangen wird oder nicht, wobei die Triggerinformation in einem Program Clock Reference, PCR, Paket enthalten ist,
wobei in dem Steuerungsschritt das erste Anwendungsprogramm gelöscht wird von den Sicherungsmitteln als Antwort darauf, dass die erste Triggerinformation nicht mehr synchron mit dem Empfangstiming empfangen wird.

8. Übertragungssystem ausgestaltet mit einer Sendevorrichtung zum Senden von AV-Inhalt und einer Empfangsvorrichtung zum Empfangen des gesendeten AV-Inhalts, wobei die Sendevorrichtung aufweist:
Sendemittel zum Senden einer Triggerinformation zum Steuern eines Prozesses in Bezug auf ein Anwendungsprogramm, das von der Empfangsvorrichtung in einer miteinander verzahnten Beziehung mit dem Fortschritt des AV-Inhalts auszuführen ist synchron mit einem Sendetiming entsprechend einem im Voraus von der Empfangsvorrichtung bestimmten Empfangstiming, wobei die Triggerinformation in einem Program Clock Reference, PCR, Paket enthalten ist;
und wobei die Empfangsvorrichtung aufweist:
Empfangsmittel zum Empfangen einer Triggerinformation zum Steuern eines Prozesses in Bezug auf ein Anwendungsprogramm, welches in einer verzahnten Beziehung mit dem Fortschritt des AV-Inhalts auszuführen ist;
Sicherungsmittel zum Sichern des Anwendungsprogramms; und
Steuermittel zum Steuern eines Zustands eines ersten Anwendungsprogramms, das von den Sicherungsmitteln gesichert ist, als Antwort darauf, ob eine erste Triggerinformation zum Bezeichnen eines Prozesses in Bezug auf das erste Anwendungsprogramm als ein Steuerungszielobjekt synchron mit einem im Voraus bestimmten Empfangstiming empfangen wird oder nicht, wobei die Triggerinformation in einem Program Clock Reference, PCR, Paket enthalten ist,
wobei die Steuermittel ausgestaltet sind, das erste Anwendungsprogramm aus den Sicherungsmitteln zu löschen als Antwort darauf, dass die erste Triggerinformation nicht mehr synchron mit dem Empfangstiming empfangen wird.

9. Übertragungssystem nach Anspruch 8, wobei die Sendemittel ausgestaltet sind, die Triggerinformation synchron mit dem Sendetiming zu senden, mit dem die Triggerinformation von der Empfangsvorrichtung innerhalb eines Empfangszeitabschnitts basierend auf dem Empfangstiming empfangen wird.

10. Übertragungssystem gemäß Anspruch 9, wobei die Sendemittel ausgestaltet sind, eine Vielzahl von Stücken der Triggerinformation synchron mit dem Sendetiming zu senden, mit dem wenigstens eines der vielen Stücke der Triggerinformation von der Empfangsvorrichtung innerhalb des Empfangszeitabschnitts empfangen wird.

## Revendications

1. Appareil de réception configuré pour recevoir du contenu AV, comprenant :
des moyens de réception pour recevoir des informations de déclencheur pour commander un processus concernant un programme d'application à exécuter en relation étroite avec la progression du contenu AV ;
des moyens de retenue pour retenir le programme d'application ; et
des moyens de commande pour commander un état d'un premier programme d'application retenu par les moyens de retenue en réponse au fait que des premières informations de déclencheur permettant de désigner un processus concernant le premier programme d'application en tant que cible de commande sont reçues ou non en synchronisme avec un rythme de réception déterminé à l'avance, lesdites informations de déclencheur étant incluses dans un paquet de Référence d'Horloge de Programme, PCR ; les moyens de commande étant configurés pour effacer le premier programme d'application des moyens de retenue, ce en réponse de quoi les premières informations de déclencheur ne sont plus reçues en synchronisme avec le rythme de réception.

2. Appareil de réception selon la revendication 1, dans lequel les moyens de commande sont configurés pour terminer le premier programme d'application en cours d'exécution et pour effacer le premier programme d'application des moyens de retenue, ce en réponse de quoi les premières informations de déclencheur ne sont plus reçues en synchronisme avec le rythme de réception.

3. Appareil de réception selon l'une quelconque des revendications 1 à 2, dans lequel les moyens de commande sont configurés pour commander un état du premier programme d'application en réponse au fait que les premières informations de déclencheur sont reçues ou non en synchronisme avec le rythme de réception pendant une période de réception basée sur le rythme de réception.

4. Appareil de réception selon l'une quelconque des revendications 1 à 2, dans lequel, dans le cas dans lequel les premières informations de déclencheur sont reçues ou non en synchronisme avec le rythme de réception, les moyens de commande sont configurés pour :
maintenir, lorsque sont reçues des premières informations de déclencheur identiques aux premières informations de déclencheur reçues en synchronisme avec le rythme de réception au cycle précédent, un état d'exécution dans le premier programme d'application en cours d'exécution, ou maintenir un état retenu du premier programme d'application retenu dans les moyens de retenue ; et
commander, lorsque sont reçues des premières informations de déclencheur incluant un type de déclencheur différent de celui qui est inclus dans les premières informations de déclencheur reçues en synchronisme avec le rythme de réception au cycle précédent, le démarrage du premier programme d'application, le lancement d'un événement dans le premier programme d'application en cours d'exécution ou l'arrêt du premier programme d'application en cours d'exécution en fonction du type de déclencheur inclus dans les premières informations de déclencheur reçues.

5. Appareil de réception selon l'une quelconque des revendications 1 à 2, dans lequel, dans le cas dans lequel le premier programme d'application n'est pas retenu dans les moyens de retenue, lorsque les premières informations de déclencheur sont reçues, les moyens de commande sont configurés pour commander les moyens de retenue pour retenir le premier programme d'application en fonction d'un type de déclencheur inclus dans les premières informations de déclencheur.

6. Procédé de réception pour un appareil de réception configuré pour recevoir du contenu AV, le procédé de réception comprenant des étapes à exécuter par l'appareil de réception et comprenant :
une étape de réception consistant à recevoir des informations de déclencheur pour commander un processus concernant un programme d'application à exécuter en relation étroite avec la progression du contenu AV ; et
une étape de commande consistant à commander un état d'un premier programme d'application retenu par une section de retenue pour retenir le programme d'application en fonction du fait que des premières informations de déclencheur, qui désignent un processus concernant le premier programme d'application en tant que cible de commande, sont reçues ou non en synchronisme avec un rythme de réception déterminé à l'avance, lesdites informations de déclencheur étant incluses dans un paquet de Référence d'Horloge de Programme, PCR ;
où, dans l'étape de commande, le premier programme d'application est effacé des moyens de retenue, ce en réponse de quoi les premières informations de déclencheur ne sont plus reçues en synchronisme avec le rythme de réception.

7. Programme pour commander un appareil de réception configuré pour recevoir du contenu AV, le programme amenant un ordinateur de l'appareil de réception à exécuter un processus comprenant :
une étape de réception consistant à recevoir des informations de déclencheur pour commander un processus concernant un programme d'application à exécuter en relation étroite avec la progression du contenu AV ; et
une étape de commande consistant à commander un état d'un premier programme d'application retenu par une section de retenue pour retenir le programme d'application en fonction du fait que des premières informations de déclencheur, qui désignent un processus concernant le premier programme d'application en tant que cible de commande, sont reçues ou non en synchronisme avec un rythme de réception déterminé à l'avance, lesdites informations de déclencheur étant incluses dans un paquet de Référence d'Horloge de Programme, PCR ;
où, dans l'étape de commande, le premier programme d'application est effacé des moyens de retenue, ce en réponse de quoi les premières informations de déclencheur ne sont plus reçues en synchronisme avec le rythme de réception.

8. Système de radiodiffusion configuré pour un appareil de transmission configuré pour transmettre du contenu AV et un appareil de réception configuré pour recevoir le contenu AV transmis, l'appareil de transmission comprenant :
des moyens de transmission pour transmettre des informations de déclencheur et commander un processus concernant un programme d'application destiné à être exécuté par l'appareil de réception en relation étroite avec la progression du contenu AV en synchronisme avec un rythme de transmission correspondant à un rythme de réception déterminé à l'avance par l'appareil de réception, lesdites informations de déclencheur étant incluses dans un paquet de Référence d'Horloge de Programme, PCR ;
et l'appareil de réception comprenant :
des moyens de réception pour recevoir les informations de déclencheur et commander un processus concernant le programme d'application à exécuter en relation étroite avec la progression du contenu AV, lesdites informations de déclencheur étant incluses dans un paquet de Référence d'Horloge de Programme, PCR ;
des moyens de retenue pour retenir le programme d'application ; et
des moyens de commande pour commander un état d'un premier programme d'application retenu par les moyens de retenue en réponse au fait que des premières informations de déclencheur permettant de désigner un processus concernant le premier programme d'application en tant que cible de commande sont reçues ou non en synchronisme avec un rythme de réception déterminé à l'avance, lesdites informations de déclencheur étant incluses dans un paquet de Référence d'Horloge de Programme, PCR ; les moyens de commande étant configurés pour effacer le premier programme d'application des moyens de retenue, ce en réponse de quoi les premières informations de déclencheur ne sont plus reçues en synchronisme avec le rythme de réception.

9. Système de radiodiffusion selon la revendication 8, dans lequel les moyens de transmission sont configurés pour transmettre les informations de déclencheur en synchronisme avec le rythme de transmission auquel les informations de déclencheur sont reçues par l'appareil de réception pendant une période de réception basée sur le rythme de réception.

10. Système de radiodiffusion selon la revendication 9, dans lequel les moyens de transmission sont configurés pour transmettre une pluralité d'éléments d'informations de déclencheur en synchronisme avec le rythme de transmission auquel au moins l'un de la pluralité d'éléments d'informations de déclencheur est reçu par l'appareil de réception pendant la période de réception.
